# EUROPEAN PATENT APPLICATION

(11) **EP 2 887 443 A1**
(43) Date of publication of application: **24.06.2015**
(21) Application number: 14198546.5
(22) Date of filing: 17.12.2014
(51) Int. Cl.: H01M 10/42, H01M 2/02, H01M 2/10

(54) **Battery pack**

(30) Priority: 17.12.2013 KR 20130156834
(71) Applicant: Samsung SDI Co., Ltd., Yongin-si, Gyeonggi-do (KR)
(72) Inventor: YI, Sang-Il, Gyeonggi-do (KR); Baek, Woon-Seong, Gyeonggi-do (KR); Ji, Se-Jin, Gyeonggi-do (KR)
(74) Representative: Walaski, Jan Filip

(57) **Abstract**

A battery pack comprising a bare cell and a case on a surface of the bare cell, the case having a circuit formed therein, wherein the circuit is electrically coupled to the bare cell and has at least one portion formed on the surface of the case that faces the surface of the bare cell.

## Description

The present invention relates to a battery pack.

Recently, secondary batteries have been widely used as power sources for portable electronic devices. As portable electronic devices are used in increasingly diverse fields, demand for secondary batteries is also rapidly increasing. The secondary batteries can be charged/discharged a plurality of times, and accordingly, are economically and environmentally efficient. Thus, the use of secondary battery packs, comprising secondary batteries, is encouraged.

As the demand for smaller sizes and lighter weight of electronic devices has increased, the small size and the light weight of secondary batteries also have increased. However, since a material such as lithium having high reactivity is provided inside of the secondary battery, the reduction of size and weight of secondary batteries is limited due to safety concerns of the secondary batteries. Accordingly, a variety of studies have been conducted to develop a secondary battery pack that can be implemented as a small and lightweight battery pack while increasing (e.g., improving) the safety of the secondary battery.

Embodiments of the present invention provide a battery pack that can be light in weight and small in size, and that can increase (e.g., improve) safety by employing a new structure.

According to an aspect of the present invention, there is provided a battery pack comprising: a bare cell; and a case on a surface of the bare cell, the case having a circuit formed therein, wherein the circuit is electrically coupled to the bare cell and has at least one portion formed on the surface of the case that faces the surface of the bare cell.

The circuit may comprise: a first circuit pattern formed on a first surface of the case facing the bare cell; a second circuit pattern formed on a second surface of the case opposite the first surface of the case; and a connecting portion electrically coupling the first and second circuit patterns.

The second circuit pattern may comprise a pad portion exposed to the outside of the case.

The connecting portion may comprise a connector configured to electrically couple the first and second circuit patterns.

A recessed portion having the second circuit pattern positioned therein may be provided in the second surface of the case.

The connecting portion may be disposed on the outside of the case. An insulating layer may be formed on the top surface of the connecting portion.

A rib portion protruding from the first surface may be provided at an outer edge of the first surface of the case, and the first circuit pattern may be formed between the rib portion and the opposite outer edge.

The rib portion may comprise a pair of rib portions respectively protruding from respective outer edges of the first surface of the case.

The bare cell may be electrically coupled to the first circuit pattern.

The battery pack may further comprise a connection tab configured to electrically couple the first circuit pattern and the bare cell.

The connection tab and the first circuit pattern may be coupled by soldering.

The case may comprise at least one rough surface, on which a portion of the circuit is formed.

The circuit may be plated.

According to another aspect of the present invention, there is provided a battery pack including: a bare cell; a case accommodating the bare cell; and a circuit having at least one portion located on a surface of the case adjacent the bare cell, the circuit being electrically coupled to the bare cell.

The circuit may include: a first circuit pattern on a first surface of the case facing the bare cell; a second circuit pattern on a second surface of the case opposite the first surface of the case; and a connecting portion electrically coupling the first and second circuit patterns.

The second circuit pattern may include a pad portion exposed to an outside.

The connecting portion may include a connector configured to electrically couple the first and second circuit patterns.

A recessed portion having the second circuit pattern positioned therein may be provided in the second surface of the case.

The connecting portion may electrically couple the first circuit pattern on the first surface and the second circuit pattern on the second surface by surrounding an outside of the case.

An insulating layer may be on the connecting portion.

A rib portion protruding from the first surface may be provided at an outer edge of the first surface of the case, and the first circuit pattern may be inside the rib portion.

The rib portion may include a pair of rib portions respectively protruding from respective sides of the first surface of the case.

The bare cell may be electrically coupled to the first circuit pattern.

The battery pack may further include a connection tab configured to electrically couple the first circuit pattern and the bare cell.

The connection tab and the first circuit pattern may be coupled by soldering.

A surface of the case on which the circuit is formed may be uneven.

The circuit may be plated.

Other features and aspects of embodiments of the present invention will become more fully apparent from the following detailed description, taken in conjunction with the accompanying drawings.

According to the battery pack of embodiments of the present invention, the circuit portion is directly formed in the case, so that it is possible to realize the decrease in size (e.g., the miniaturization) and the decrease in weight of the battery pack, and to increase (e.g., improve) the safety of the battery pack.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a battery pack according to an embodiment of the present invention.
FIG. 2 is a partially exploded perspective view of the battery pack shown in FIG. 1.
FIG. 3 is a cross-sectional view taken along line A-A' of the battery pack shown in FIG. 1.
FIG. 4 is a plan view illustrating the first surface of the case of the battery pack shown in FIG. 2.
FIG. 5 is a plan view illustrating the second surface of the case of the battery pack shown in FIG. 1.
FIG. 6 is a perspective view of a battery pack according to another embodiment of the present invention.
FIG. 7 is an exploded perspective view of the battery pack shown in FIG. 6.
FIG. 8 is a process flowchart illustrating a method of manufacturing the battery pack shown in FIG. 1.

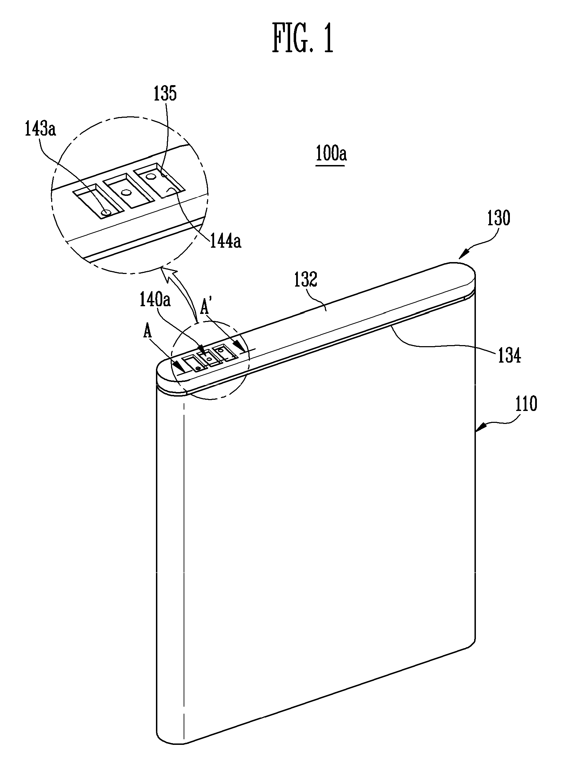

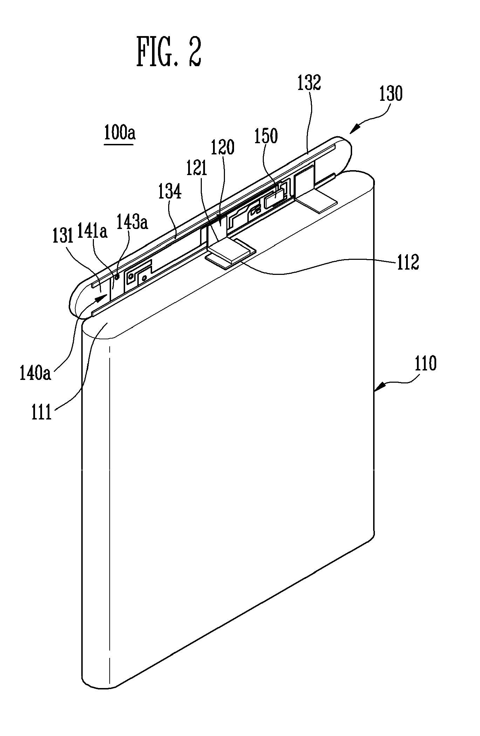

Hereinafter, the battery pack 100a according to this embodiment will be described with reference to FIGS. 1 and 2.

As shown in FIG. 1, the battery pack 100a according to this embodiment includes a bare cell (or cell) 110, a case 130 (for example, a top case) positioned on the bare cell (or cell) 110, and a circuit portion (e.g., a circuit) 140a formed in the case 130. The circuit portion 140a is formed in the case 130 (e.g., formed directly in the case 130, or integrated with the case, or forming part of the case) so that a separate printed circuit board is unnecessary. Accordingly, it is possible to reduce cost and to realize a decrease in size (e.g., a miniaturization, decrease in height of the top case) and a decrease in weight of the battery pack 100a.

The bare cell 110 is a component (e.g., member) that generates electrochemical energy through the movement of ions or electrons.

The bare cell 110 may be manufactured by housing (e.g., accommodating) an electrode assembly and an electrolyte in a battery case. In one embodiment, the electrode assembly may be formed by winding or stacking a positive electrode plate, a negative electrode plate and a separator interposed therebetween. The electrode assembly generates energy through an electrochemical reaction between the electrode assembly and the electrolyte, and the generated energy is supplied to the outside of the bare cell 110 through an electrode terminal, etc. For example, the battery case may be formed in a pouch shape, a prismatic shape or a cylindrical shape.

For example, an electrode terminal 112 may be formed on one surface 111 of the bare cell 110. The electrode terminal 112 may be electrically coupled (e.g., connected) to the circuit portion 140a through a connection tab 120. In this case, the connection tab 120 may be made of an electrically conductive metal such as gold, silver, copper or nickel having excellent electrical conductivity. The connection tab 120 may have a bending portion 121 to provide convenience when the case 130 is coupled to the bare cell 110. At least one of the connections including the connection between the connection tab 120 and the electrode terminal 112 and the connection between the connection tab 120 and the circuit portion 140a may be made by soldering.

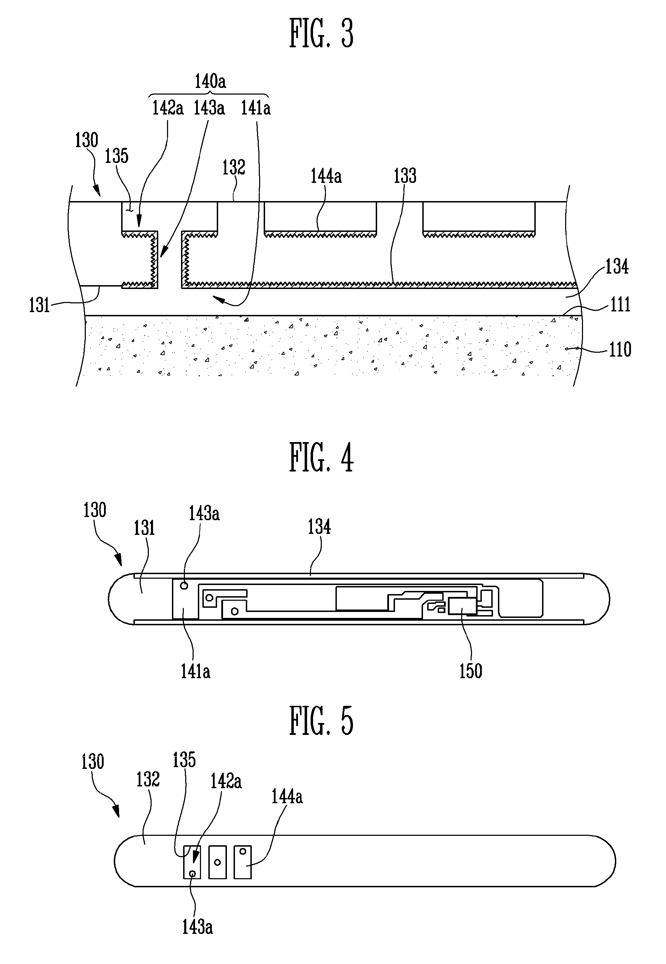

FIG. 3 is a cross-sectional view taken along line A-A' of the battery pack 100a shown in FIG. 1. Hereinafter, the case 130 according to this embodiment will be described with reference to FIGS. 1 to 3.

As shown in FIGS. 1 and 2, the case 130 is a component (e.g., member) that protects the bare cell 110 and allows the bare cell 110 to be insulated from an outside. The case 130 is positioned on the one surface 111 of the bare cell 110, from which the electrode terminal 112 protrudes, to cover the one surface 111 of the bare cell 110. In one embodiment, the case 130 may have a first surface 131 and a second surface 132. The first surface 131 may face the bare cell 110, and the second surface 132 may face the outside.

A rib portion 134 that protrudes or extends from the first surface 131 may be provided at an outer edge of the first surface 131 of the case 130. In one embodiment, the rib portion 134 may be provided as a pair of rib portions that respectively protrude from both long sides of the long and short sides of the first surface 131. In other words, the rib portion 134 may be located at the two lengthwise edges of the first surface 131. The rib portion 134 can protect the circuit portion 140a positioned inside the first surface 131 from the outside and reduce a chance of or prevent a short circuit of the circuit portion 140a with the outside.

The case 130 may be positioned on any one of a top and a bottom of the bare cell 110. Alternatively, the case 130 may be positioned on both the top and bottom of the bare cell 110. If the electrode terminal 112 is not provided on a surface opposite to the surface of the bare cell 110, on which the case 130 is positioned, the case 130 having no circuit portion may be coupled to the surface.

As shown in FIG. 3, the circuit portion 140a, which is further described below, may be positioned in the case 130. In this case, an unevenness (or an uneven surface) 133 may be formed in the area of the case 130 in which the circuit portion 140a is formed. In one embodiment, the unevenness (or uneven surface) 133 corresponds to a shape provided with roughness or a recessed shape, and may be formed by laser processing. For example, the case 130 may be made of a material such as resin, which can be laser-processed, thereby forming the unevenness 133.

A recessed portion 135 may be provided in the second surface 132 of the case 130. In one embodiment, the recessed portion 135 is a portion in which a pad portion 144a of the circuit portion 140a is positioned, and the recessed portion 135 may have a concave shape. Accordingly, the recessed portion 135 allows the pad portion 144a to not protrude beyond the second surface 132, thereby protecting the pad portion 144a from the outside.

FIG. 4 is a plan view illustrating the first surface 131 of the case 130 of the battery pack 100a shown in FIG. 2. FIG. 5 is a plan view illustrating the second surface 132 of the case 130 of the battery pack 100a shown in FIG. 1. Hereinafter, the circuit portion 140a formed in the case 130 of the battery pack 100a according to this embodiment will be described with reference to FIGS. 2 to 5.

The circuit portion 140a is formed in the case 130 and may be electrically coupled (e.g., connected) to the bare cell 110. In one embodiment, the circuit portion 140a, for example, may include a first circuit pattern 141a formed on the first surface 131 that is a surface of the case 130 adjacent to or facing the bare cell 110, a second circuit pattern 142a formed on the second surface 132 of the case 130, and a connecting portion 143a for electrically coupling the first and second circuit patterns 141a and 142a. In this embodiment, the connecting portion 143a may be implemented as an electric connector that electrically couples the first and second circuit patterns 141a and 142a by passing through the first and second surfaces 131 and 132 of the case 130.

In this case, the first circuit pattern 141a is formed on the first surface 131 of the case 130, and hence may be opposite to the bare cell 110. The connection tab 120 is coupled to the first circuit pattern 141a by, for example, soldering, so that the first circuit pattern 141a may be electrically coupled to the bare cell 110 through the connection tab 120. The first circuit pattern 141a may be positioned between the pair of rib portions 134 that protrude from the first surface 131 of the case 130. Accordingly, it is possible to decrease the chance of or prevent in advance a short circuit of the circuit portion 140a with the outside. The second circuit pattern 142a is formed on the second surface 132 of the case 130, which faces the outside, and hence may have the pad portion 144a through which an external device may be electrically coupled to the battery pack 100a. The external device is coupled to the pad portion 144a so that the battery pack 100a may be used as a power source. The pad portion 144a may be positioned in the recessed portion 135 of the case 130, as described above.

The connecting portion 143a implemented as the electric connector may be implemented in a form of being plated on the surface of a via hole as shown in these figures, or may be implemented in a form of taking up (e.g., blocking) the entire via hole. In this case, power transferred through the bare cell 110 is transferred to the first circuit pattern 141a, and the power transferred to the first circuit pattern 141a is transferred to the pad portion 144a of the second circuit pattern 142a through the connecting portion 143a implemented as the via. Accordingly, a user can use the power of the battery pack 100a by coupling an external device to the pad portion 144a.

The circuit portion 140a may control voltage or current in charging and discharging of the bare cell 110. In one embodiment, several electronic components 150 may be mounted on the circuit portion 140a. For example, the electronic components 150 may include a field effect transistor (FET), an integrated circuit (IC), etc. The electronic components 150 may perform a function of controlling the electrode assembly in the bare cell 110 or cutting off a circuit when the electrode assembly abnormally operates. At least one of the first and/or second circuit patterns 141a and/or 142a of the circuit portion 140a includes a switching circuit. Thus, the switching circuit, together with the electronic components 150, may more efficiently control or protect the battery pack 100a. Specifically, the circuit portion 140a may block overcharging, overdischarging, overcurrent, short circuit and reverse voltage of the battery pack 100a, so that it is possible to reduce the chance of or prevent the explosion, overheating, leakage and overcharging/overdischarging characteristics of the battery pack 100a and to restrain the degradation of electrical performance and restrain the chance of abnormal operation. Accordingly, it is possible to reduce or eliminate risk factors and to extend the lifespan of the battery pack 100a.

As a result, the circuit portion 140a according to this embodiment performs the function of a protective circuit module, and is formed (e.g., directly formed) in the case 130. Hence, a separate printed circuit board is unnecessary, and accordingly, it is possible to reduce the thickness and volume of the battery pack 100a. Thus, it is possible to increase (e.g., improve) the safety of the battery pack 100a while realizing a decrease in size (e.g., a miniaturization) and a decrease in weight of the battery pack 100a.

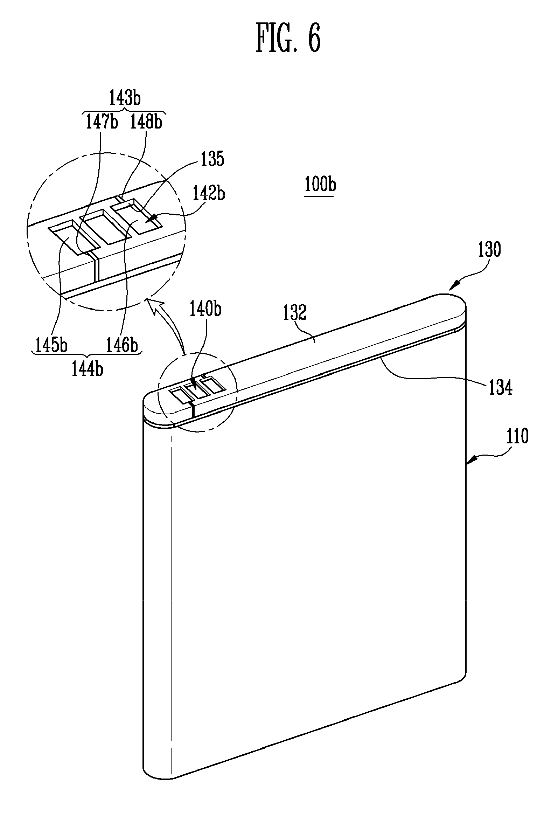

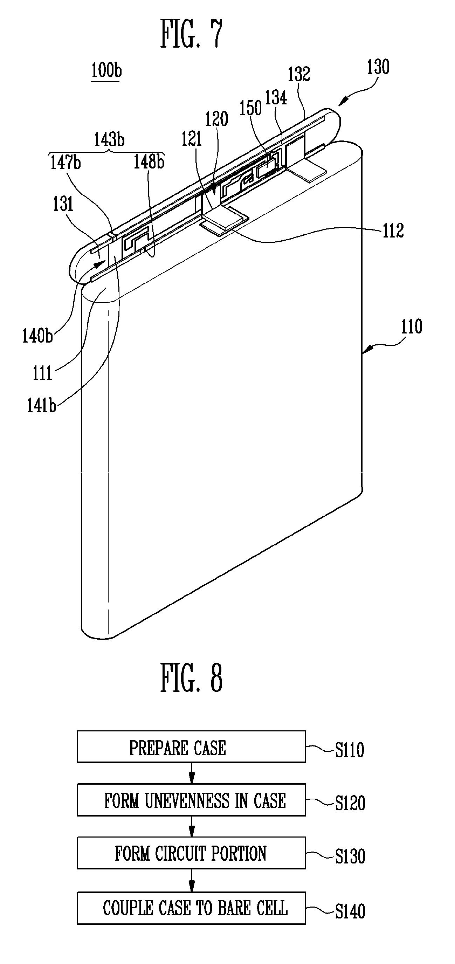

FIG. 6 is a perspective view of a battery pack 100b according to another embodiment of the present invention. FIG. 7 is an exploded perspective view of the battery pack 100b shown in FIG. 6. Hereinafter, the battery pack 100b according to this embodiment will be described with reference to FIGS. 6 and 7. In one embodiment, components identical or corresponding to those of the aforementioned embodiment are designated by like reference numerals, and their detailed descriptions may be omitted to avoid redundancy.

The battery pack 100b according to this embodiment includes the bare cell 110, the case 130 positioned on the bare cell 110, and a circuit portion 140b formed in the case 130. A connecting portion 143b of the circuit portion 140b is not implemented in the form of an electric connector, but may be implemented in a form surrounding an outside of the case 130.

Specifically, in order to electrically couple a first circuit pattern 141b positioned on the first surface 131 of the case 130 and a second circuit pattern 142b positioned on the second surface 132 of the case 130, the connecting portion 143b surrounds an outside (e.g., a perimeter) of the case 130 so that both ends of the connecting portion 143b may be coupled to the first and second circuit patterns 141b and 142b. In this case, any one of pad portions 144b acts as a positive electrode, and the other of the pad portions 144b acts as a negative electrode. Hence, a first connecting portion 147b coupled to a first pad portion 145b having a first polarity and a second connecting portion 148b coupled to a second pad portion 146b having a second polarity are extended in different directions from each other, so that it is possible to reduce the chance of or prevent the occurrence of an undesired short circuit between the first and second connecting portions 147b and 148b. For example, as shown in FIG. 6, the first connecting portion 147b is coupled in a form surrounding one long side (e.g., one lengthwise side or edge) of the two long sides (e.g., two lengthwise sides or edges) of the case 130, and the second connecting portion 148b is coupled in a form surrounding the other long side (e.g., the other lengthwise side or edge), so that it is possible to reduce (e.g., prevent) the occurrence of a short circuit between the first and second connecting portions 147b and 148b.

The connecting portion 143b according to this embodiment is exposed to the outside after the battery pack 100b is assembled, and hence there is a risk that the connecting portion 143b may be short-circuited with an external device. Thus, an insulating layer such as an insulating coating layer may be formed on a top surface of the connecting portion 143b, thereby reducing the risk of a short circuit.

FIG. 8 is a process flowchart illustrating a method of manufacturing the battery pack 100a shown in FIG. 1. Hereinafter, the method of manufacturing the battery pack 100a according to this embodiment will be described with reference to FIG. 8.

First, a case 130 is prepared (S110). A recessed portion 135 may be provided in the case 130 so that a pad portion 144 may be positioned in the recessed portion 135, and a rib portion 134 may be provided to protrude from a first surface 131 of the case 130. A via hole may be provided in the area where first and second circuit patterns 141a and 142a of the case 130 are to be coupled to each other. The structure of the case 130 may be implemented by, for example, an injection process.

Next, an unevenness 133 may be formed in the case 130, using a laser (S120). In this case, the unevenness 133 may be formed in an area where a circuit portion 140a is to be formed in the case 130. The unevenness 133 may improve the coupling performance between the circuit portion 140a and the case 130.

Next, the circuit portion 140a is formed in the case 130 (S130). In this case, the circuit portion 140a may be formed by, for example, a plating process. The first circuit pattern 141a, the second circuit pattern 142a and the inside of the via hole are plated by the plating process, thereby forming a connecting portion 143a implemented as a via.

Next, the case 130 and the bare cell 110 are coupled to each other (S140). In this case, the case 130 and the bare cell 110 may be coupled so that the first surface 131 of the case 130 and the first circuit pattern 141a are opposite (e.g., adjacent) to the bare cell 110. As the case 130 and the bare cell 110 are coupled to each other, an electrode terminal 112 of the bare cell 110 may be electrically coupled to the first circuit pattern 141a through a connection tab 120.

The method of manufacturing the battery pack according to this embodiment is performed based on the battery pack 100a shown in FIG. 1. However, those skilled in the art can easily understand a method of manufacturing the battery pack 100b shown in FIG. 6 with reference to the method of manufacturing the battery pack 100a shown in FIG. 1.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack comprising:
a bare cell; and
a case on a surface of the bare cell, the case having a circuit formed therein,
wherein the circuit is electrically coupled to the bare cell and has at least one portion formed on the surface of the case that faces the surface of the bare cell.

2. The battery pack of claim 1, wherein the circuit comprises:
a first circuit pattern formed on a first surface of the case facing the bare cell;
a second circuit pattern formed on a second surface of the case opposite the first surface of the case; and
a connecting portion electrically coupling the first and second circuit patterns.

3. The battery pack of claim 2, wherein the second circuit pattern comprises a pad portion exposed to the outside of the case.

4. The battery pack of claim 2 or 3, wherein the connecting portion comprises a connector configured to electrically couple the first and second circuit patterns.

5. The battery pack of any one of claims 2 to 4, wherein a recessed portion having the second circuit pattern positioned therein is provided in the second surface of the case.

6. The battery pack of any one of claims 2 to 5, wherein the connecting portion is disposed on the outside of the case.

7. The battery pack of claim 6, wherein an insulating layer is formed on the top surface of the connecting portion.

8. The battery pack of any one of claims 2 to 7, wherein a rib portion protruding from the first surface is provided at an outer edge of the first surface of the case, and wherein the first circuit pattern is formed between the rib portion and the opposite outer edge.

9. The battery pack of claim 8, wherein the rib portion comprises a pair of rib portions respectively protruding from respective outer edges of the first surface of the case.

10. The battery pack of any one of claims 2 to 9, wherein the bare cell is electrically coupled to the first circuit pattern.

11. The battery pack of claim 10, further comprising a connection tab configured to electrically couple the first circuit pattern and the bare cell.

12. The battery pack of claim 11, wherein the connection tab and the first circuit pattern are coupled by soldering.

13. The battery pack of any one of the preceding claims, wherein the case comprises at least one rough surface, on which a portion of the circuit is formed.

14. The battery pack of any one of the preceding claims, wherein the circuit is plated.
